# EUROPEAN PATENT SPECIFICATION

(11) **EP 3 705 618 B1**
(45) Date of publication and mention of the grant of the patent: **03.05.2023**
(21) Application number: 18898677.2
(22) Date of filing: 06.09.2018
(51) Int. Cl.: D06F 73/02

(54) **CLOTHES MANAGER**
KLEIDERMANAGER
GESTIONNAIRE DE VÊTEMENTS

(30) Priority: 08.01.2018 KR 20180002481
(43) Date of publication of application: 09.09.2020
(73) Proprietor: Samsung Electronics Co., Ltd., Gyeonggi-do 16677 (KR)
(72) Inventor: CHAE, Gyeong Ryeol, Hwaseong-si Gyeonggi-do 18482 (KR); PARK, Jung Ha, Seongnam-si Gyeonggi-do 13560 (KR); PYO, Sang Yeon, Yongin-si Gyeonggi-do 16944 (KR); KIM, Dong Wook, Suwon-si Gyeonggi-do 16679 (KR); PARK, Joo Yeon, Seoul 04323 (KR); SEO, Ja Yeon, Suwon-si Gyeonggi-do 16658 (KR)
(74) Representative: Walaski, Jan Filip
(86) International application number: PCT/KR2018/010426
(87) International publication number: WO 2019/135464

(56) References cited:
- WO-A2-2011/108860
- JP-A- 2001 070 696
- KR-A- 20060 008 506
- KR-A- 20110 035 030
- KR-A- 20130 057 340
- KR-A- 20130 094 923
- KR-A- 20130 101 773
- KR-Y1- 200 435 956
- US-A1- 2006 137 206

## Description

### Technical Field

The present disclosure relates to a clothes management apparatus for removing dust stuck to clothes or odor that has permeated into clothes.

### Background Art

A clothes management apparatus is an apparatus that performs the management of clothes such as removing dust stuck to clothes or odor that has permeated into clothes, and reducing creases of clothes.

The clothes management apparatus includes a main body provided with a clothes management compartment in which clothes are accommodated and managed, and a door for opening and closing the clothes management compartment. The main body is also provided with an air blower for supplying air or hot air to clothes, and a steam generator for supplying steam to clothes.

Therefore, the clothes management apparatus performs a function of supplying air or hot air generated by the air blower to clothes to remove dust stuck to clothes or odor that has permeated into clothes and a function of spraying steam generated by the steam generator to smooth out creases formed on clothes.

US2006/0137206A1, KR2013-0094923A and KR2011-0035030A relate to clothes management apparatuses having a garment hanger configured to supply air into the interior of a garment hung on the hanger.

### Technical Problem

It is an aspect of the present disclosure to provide a clothes management apparatus capable of simultaneously blowing air to the inside and outside of an upper garment.

It is another aspect of the present disclosure to provide a clothes management apparatus capable of blowing air on both arms of an upper garment as well as on a body of the upper garment.

### Technical Solution

In accordance with an aspect of the invention, there is provided a clothes management apparatus according to claim 1.

Optional features are set out in the dependent claims. Other examples are set out in the following disclosure.

The upper garment hanger is detachably installed in the main body.

The main body includes at least one discharge pipe connected to the upper garment hanger, and the upper garment hanger is movably installed on the discharge pipe to be installed or separated to or from the discharge pipe by the movement.

The upper garment hanger includes a first guide rail provided at an upper end thereof in the front-rear direction, and the discharge pipe includes a second guide rail provided at a lower end thereof in the front-rear direction to be movably installed in the first guide rail.

The clothes management apparatus further includes a lower garment hanger connected to a lower side of the upper garment hanger, wherein the lower garment hanger includes a lower garment hanging portion extending horizontally to hang a lower garment.

The lower garment hanging portion includes four wires arranged in parallel vertically and horizontally.

The lower garment hanger further includes a filter accommodation portion connected to the lower garment hanging portion to accommodate a filter.

In accordance with one example, a clothes management apparatus includes a main body including a clothes management compartment, and an upper garment hanger disposed in the clothes management compartment to hang an upper garment, wherein the upper garment hanger includes a connection hole connected to the main body to receive air, an upper garment hanger air discharge port to discharge air to the inside of the upper garment, a first flow passage to guide air to the inside of a body of the upper garment, and a pair of second flow passages provided to be inclined downward on opposite sides of the first flow passage to guide air to the inside of both arms of the upper garment.

In accordance with another example, a clothes management apparatus includes a main body including a clothes management compartment, and a clothes hanger detachably installed in the clothes management compartment, wherein the clothes hanger includes an upper garment hanger to hang an upper garment, and a lower garment hanger connected to a lower side of the upper garment hanger to hang a lower garment.

### Advantageous Effects

The clothes management apparatus according to the present disclosure can simultaneously discharge air and steam to the inside and outside of an upper garment, so that not only the outside but also the inside of the upper garment can be managed simultaneously.

In addition, the clothes management apparatus according to the present disclosure can supply air to both arms of an upper garment as well as a body of the upper garment, so that both of the arms of the upper garment can be managed more efficiently.

### Brief Description of Drawings

FIG. 1 is a perspective view of a clothes management apparatus according to an embodiment of the present disclosure.
FIG. 2 is a side cross-sectional view of a clothes management apparatus according to an embodiment of the present disclosure.
FIG. 3 is an exploded perspective view of a clothes management apparatus according to an embodiment of the present disclosure.
FIG. 4 is an exploded perspective view of a clothes hanger applied to a clothes management apparatus according to an embodiment of the present disclosure.
FIG. 5 is a perspective view of a clothes hanger applied to a clothes management apparatus according to an embodiment of the present disclosure.

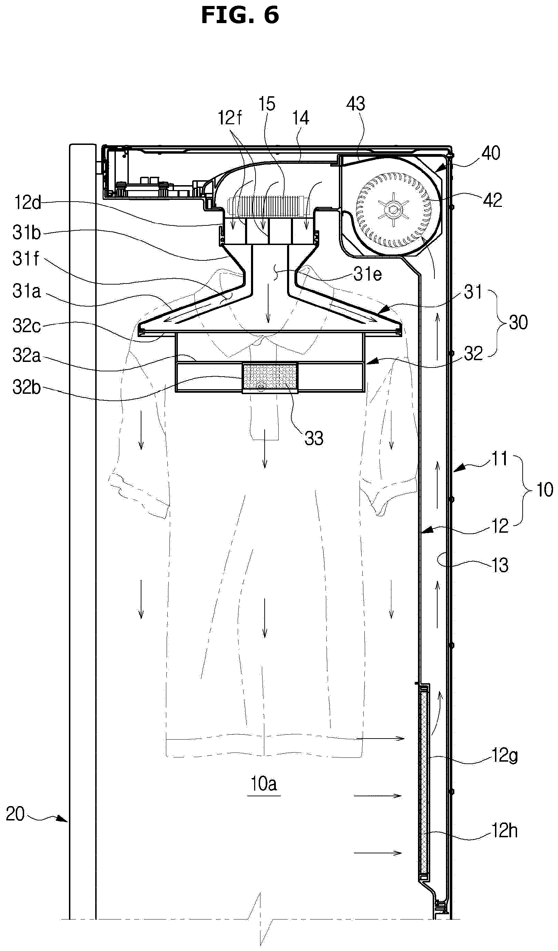

FIG. 6 is a side cross-sectional side view illustrating a state in which a clothes management apparatus according to an embodiment of the present disclosure operates.
FIG. 7 is a front cross-sectional view illustrating a state in which air is discharged through a clothes hanger in a clothes management apparatus according to an embodiment of the present disclosure.
FIG. 8 is a side cross-sectional view illustrating a state in which air is discharged through a clothes hanger in a clothes management apparatus according to an embodiment of the present disclosure.

### Mode for Disclosure

The embodiments described herein and the configurations shown in the drawings are only examples of preferred embodiments of the present disclosure, and various modifications may be made without departing from the scope of the invention, as defined by the claims.

Like reference numbers or signs in the various figures of the present application represent parts or components that perform substantially the same functions.

The terms used herein are for the purpose of describing the embodiments and are not intended to restrict and/or to limit the present disclosure. For example, the singular expressions herein may include plural expressions, unless the context clearly dictates otherwise. The terms "comprises" and "has" are intended to indicate that there are features, numbers, steps, operations, elements, parts, or combinations thereof described in the specification, and do not exclude the presence or addition of one or more other features, numbers, steps, operations, elements, parts, or combinations thereof.

It will be understood that, although the terms first, second, etc. may be used herein to describe various components, these components should not be limited by these terms. These terms are only used to distinguish one component from another. For example, without departing from the scope of the present disclosure, the first component may be referred to as a second component, and similarly, the second component may also be referred to as a first component. The term "and/or" includes any combination of a plurality of related items or any one of a plurality of related items.

In this specification, the terms "front," "rear," "upper," "lower," "left," and "right" are defined with reference to the drawings, and the shape and position of each component are not limited by these terms.

Hereinafter, a clothes management apparatus according to an embodiment of the present disclosure will be described in detail with reference to the drawings.

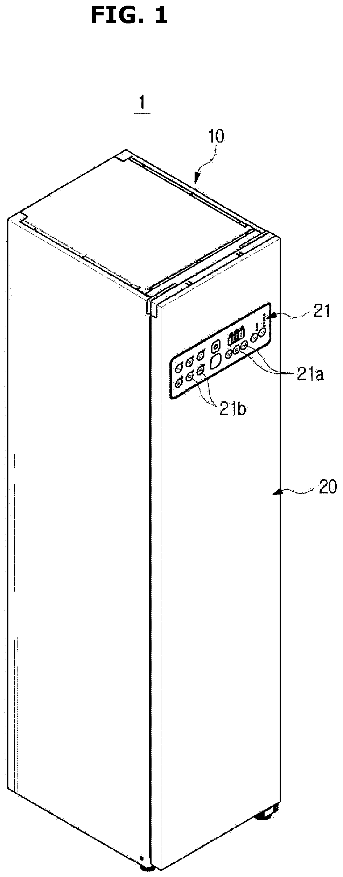

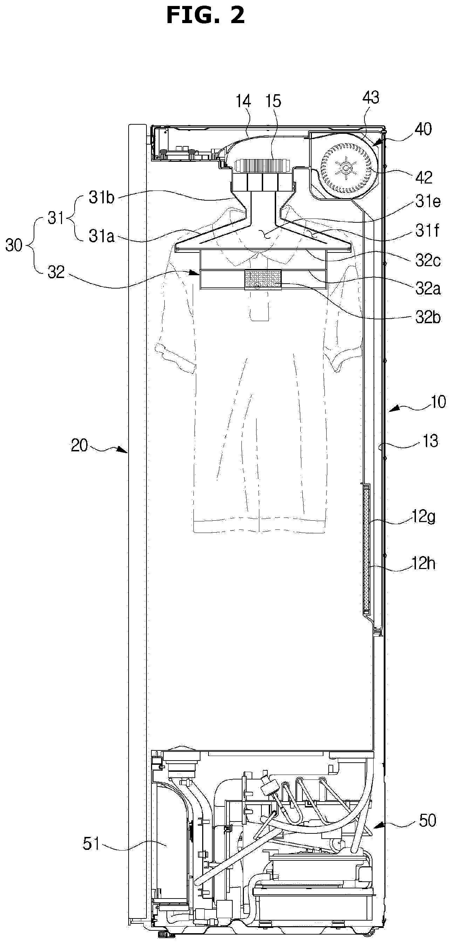

FIG. 1 is a perspective view of a clothes management apparatus according to an embodiment of the present disclosure, and FIG. 2 is a side cross-sectional view of a clothes management apparatus according to an embodiment of the present disclosure.

As illustrated in FIGS. 1 and 2, a clothes management apparatus 1 includes a main body 10 including a clothes management compartment 10a in which clothes are accommodated and managed, a door 20 to open and close the clothes management compartment 10a, and a clothes hanger 30 disposed in the clothes management compartment 10a to hang clothes.

The clothes management apparatus 1 further includes an air blower 40 disposed at an upper portion of the main body 10 to supply air to the clothes management compartment 10a, and a steam generator 50 disposed at a lower portion of the main body 10 to generate steam to be supplied to the clothes management compartment 10a. Although not explicitly shown in the drawings, the clothes management apparatus 1 may include components that constitute a refrigeration cycle for dehumidification of clothes.

Accordingly, in a state where clothes are disposed in the clothes management compartment 10a, the air generated by the air blower 40 is supplied to the clothes management compartment 10a so that dust stuck to clothes and odor that has permeated into clothes may be removed, and the steam generated by the steam generator 50 is supplied to the clothes management compartment 10a so that creases of clothes may be removed.

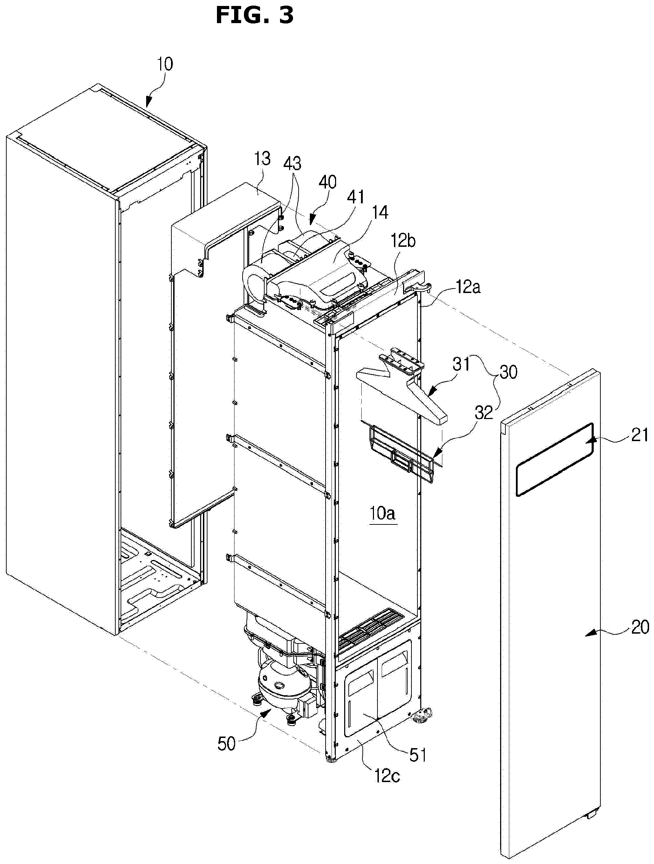

FIG. 3 is an exploded perspective view of a clothes management apparatus according to an embodiment of the present disclosure.

As illustrated in FIG. 3, the main body 10 includes an outer housing 11, an inner housing 12 disposed inside the outer housing 11 to partition the inside space of the outer housing 11, and ducts 13 and 14 disposed between the outer housing 11 and the inner housing 12 to guide the circulation of air.

The door 20 is rotatably installed on one side of a front surface of the main body 10 to open and close the clothes management compartment 10a.

The door 20 includes a control panel 21 provided on a front surface thereof for allowing a user to select the operation of the clothes management apparatus 1. The control panel 21 includes various buttons 21a for allowing the user to select the operation of the clothes management apparatus 1, and a display 21b on which an operation state and the like of the clothes management apparatus 1 is displayed.

The outer housing 11 is formed in a vertically long box shape to form an outer appearance of the main body 10. A front surface of the outer housing 11 is opened and the inner housing 12, the air blower 40 and the steam generator 50 are accommodated inside the outer housing 11.

The inner housing 12, which is formed in a box shape with its front surface opened, includes a clothes management portion 12a to form the clothes management compartment 10a, an upper cover portion 12b extending upward from an upper end of the clothes management portion 12a to form a space in which the air blower 40 is accommodated, and a lower cover portion 12c extending downward from a lower end of the clothes management portion 12a to form a space in which the steam generator 50 is accommodated.

A discharge pipe 12d to discharge air to the inside of the clothes hanger 30 is disposed on an inner upper surface of the clothes management portion 12a of the inner housing 12, and exterior air discharge ports 12e to discharge air to both sides of an upper garment hung on the clothes hanger 30 are provided at both sides of the discharge pipe 12d.

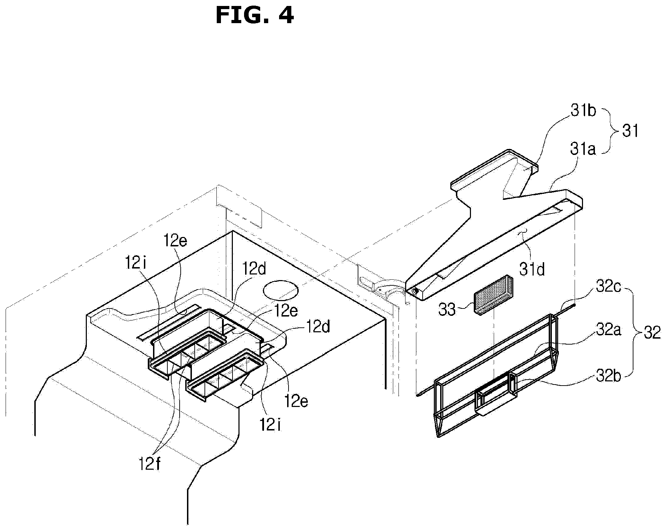

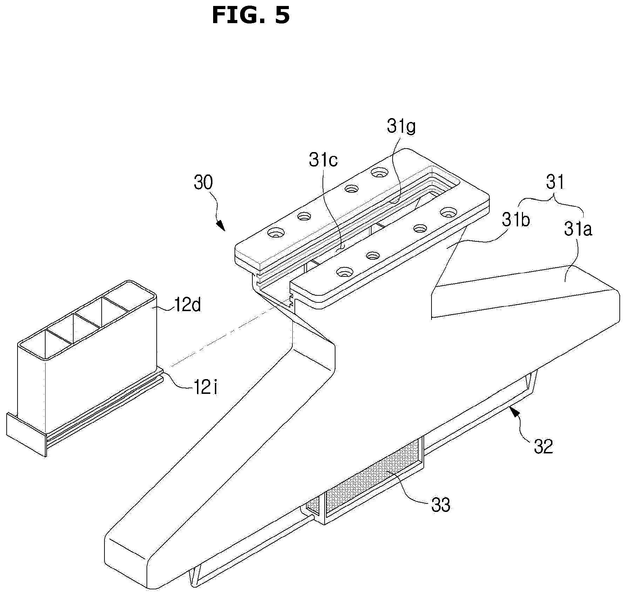

As illustrated in FIGS. 4 and 5, the discharge pipe 12d is formed by a pipe having a rectangular shape elongated in the front-rear direction. In this embodiment, two of the discharge pipes 12d are arranged to be spaced apart from each other and to be in parallel in the left-right direction so as to hang two pieces of clothes. The inside of the discharge pipes 12d are divided through a plurality of partitions 12f which are spaced apart from each other in the front-rear direction, so that air is evenly dispersed and discharged back and forth by the partitions 12f.

The exterior air discharge ports 12e are each provided between two of the discharge pipes 12d and at both sides of the discharge pipes 12d. That is, a total of three of the exterior air discharge ports 12e are provided.

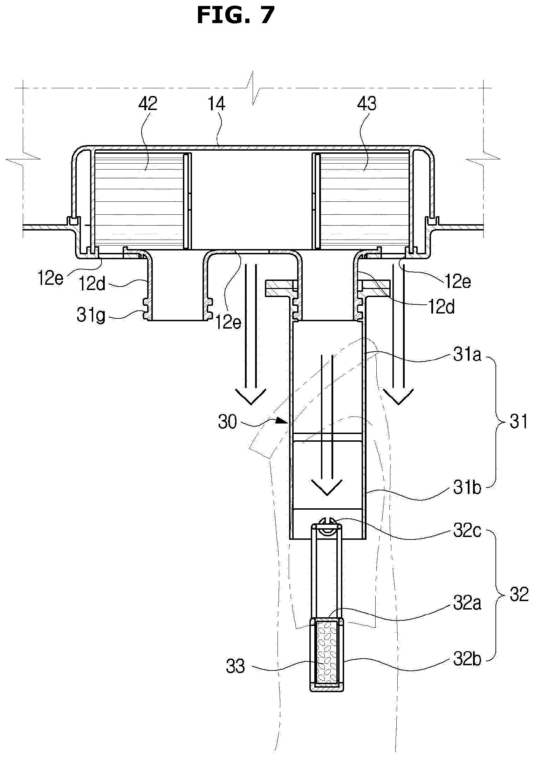

Accordingly, as illustrated in FIG. 7, the air discharged from the discharge pipes 12d is transferred to the inside of an upper garment through the clothes hanger 30 to separate dust stuck to the inner surface of the upper garment or to remove odor that has permeated into the inner surface of the upper garment. In addition, the air discharged through the exterior air discharge ports 12e comes in contact with the outer surface of the upper garments hung on two of the clothes hangers 30 to separate dust stuck to the outer surface of the upper garments or remove odor that has permeated into the outer surface of the upper garments.

The present embodiment illustrates that the clothes management apparatus 1 includes two of the discharge pipes 12d and three of the exterior air discharge ports 12e in the clothes management compartment 10a, but this is only an example. For example, the clothes management apparatus 1 may include one of the discharge pipe 12d and two of the exterior air discharge ports 12e, or may include three or more of the discharge pipes 12d and four or more of the exterior air discharge ports 12e.

Referring to FIGS. 2 and 3, the ducts 13 and 14 include the suction duct 13 for guiding the air inside the clothes management compartment 10a to the air blower 40, and the discharge duct 14 for dispersing and guiding the air discharged from the air blower 40 to the discharge pipes 12d and the exterior air discharge ports 12e. In addition, a heater 15 generating hot air by heating the air before being discharged to the discharge pipes 12d is disposed inside the discharge duct 14.

The suction duct 13 is provided such that a lower portion of the suction duct 13 is connected to a lower end portion of a rear surface of the clothes management portion 12a and an upper end portion of the suction duct 13 covers the air blower 40. The discharge duct 14 is provided such that a rear end portion of the discharge duct 14 is connected to the air blower 40 and a front end portion of the discharge duct 14 covers an outer upper surface of the clothes management portion 12a, and thus the discharge duct 14 is connected to the discharge pipes 12d and the exterior air discharge ports 12e.

A suction port 12g for allowing the air in the clothes management compartment 10a to be introduced into the suction duct 13 is provided on the rear surface of the clothes management portion 12a and a filter 12h for collecting foreign substances such as dust is disposed in the suction port 12g.

The air blower 40 is installed at a rear side above the clothes management portion 12a, and includes a driving motor 41 for a rotational force, two blowing fans 42 rotated by the driving motor 41, and a pair of fan cases 43 for accommodating the blowing fans 42, respectively.

The driving motor 41 has a shaft protruding from opposite sides of the driving motor 41, and the blowing fans 42 are installed on the opposite ends of the shaft, so that the blowing fans 42 are simultaneously rotated by the driving motor 41.

Two of the blowing fans 42 are provided as a centrifugal fan for sucking air in an axial direction and discharging air outward in a radial direction.

The fan cases 43 are provided with a suction port (not shown) at opposite sides thereof and a discharge port (not shown) at a front side thereof to guide the air sucked from the opposite sides to the front side.

The steam generator 50 includes a water tank 51 for storing water, a heater (not shown) for heating water to generate steam, and the like. The water tank 51 is detachably installed through the lower cover portion 12c described above. The steam generated in the steam generator 50 is transferred to the air blower 40 and supplied to the clothes management compartment 10a through the air blower 40.

As illustrated in FIGS. 4 and 5, the clothes hanger 30 includes an upper garment hanger 31 for hanging an upper garment such as a coat and a jacket, and a lower garment hanger 32 connected to a lower side of the upper garment hanger 31 to hang a lower garment such as trousers and pants.

The upper garment hanger 31 includes an upper garment hanging portion 31a formed in a substantially triangular shape with its width increasing toward a lower side to hang an upper garment, and a connection pipe portion 31b extending upward from an upper end of the upper garment hanging portion 31a and connected to the discharge pipes 12d.

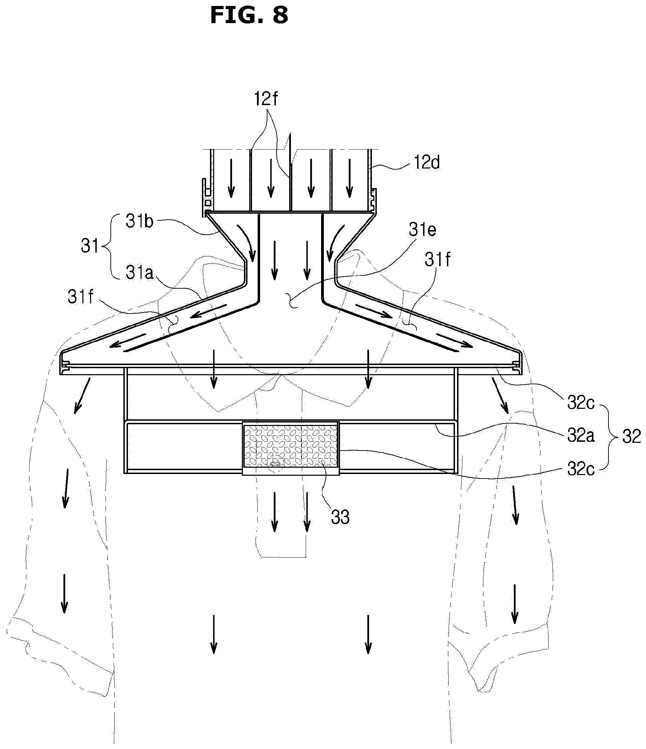

An upper end of the connection pipe portion 31b is connected to the discharge pipes 12d to form a connection hole 31c for receiving air from the discharge pipes 12d, and a lower surface of the upper garment hanging portion 31a forms an upper garment hanger air discharge port 31d to discharge air to the inside of the upper garment hung on the upper garment hanging portion 31a. As illustrated in FIG. 8, the upper garment hanger 31 is provided with flow passages 31e and 31f therein to guide the air, which is transferred through the connection hole 31c, to the upper garment hanger air discharge port 31d.

The flow passages 31e and 31f include the first flow passage 31e to guide air to the inside of a body of the upper garment hung on the upper garment hanger 31, and a pair of the second flow passages 31f formed to be inclined downward from opposite sides of the first flow passage 31e so as to guide air to the inside of both arms of the upper garment hung on the upper garment hanger 31.

Accordingly, since air is dispersed not only on the inside of a body of an upper garment but also on the inside of both arms of the upper garment through the first flow passage 31e and the second flow passages 31f, dust, odor and creases on both of the arms of the upper garment as well as on the body of the upper garment may be removed.

The lower garment hanger 32 includes a lower garment hanging portion 32a extending in a horizontal direction to hang a lower garment, a filter accommodation portion 32b provided at a lower side of the lower garment hanging portion 32a to accommodate various kinds of filters 33 that may perform various functions, and a connection portion 32c provided at an upper side of the lower garment hanging portion 32a to connect the lower garment hanger 32 to the upper garment hanger 31. As described above, since the lower garment hanger 32 is connected to a lower side of the upper garment hanger 31, the lower garment hung on the lower garment hanging portion 32a is located inside the upper garment hung on the upper garment hanging portion 31a.

Accordingly, the air discharged through the second flow passage 31f to the inside of the upper garment passes through the lower garment hung on the lower garment hanging portion 32a in the process of passing through the inside of the body of the upper garment, and thus dust stuck to the lower garment, odor permeated into the lower garment, and creases of the lower garment also are removed.

The lower garment hanging portion 32a includes two wires extending horizontally and spaced left and right in parallel with each other. Accordingly, the space between the wires in a state where the lower garment is hung on the lower garment hanging portion 32a serves as a flow passage through which air may pass.

The filter accommodation portion 32b is connected to a lower side of the lower garment hanging portion 32a and formed by wires similarly to the lower garment hanging portion 32a. In the filter accommodation portion 32b, various kinds of the filters 33 such as deodorant, fragrance and the like may be selectively arranged by the user.

In this embodiment, the clothes hanger 30 is detachably installed on the main body 10 so that clothes may be hung in a state while the clothes hanger 30 is separated from the main body 10.

To this end, as illustrated in FIG. 5, the clothes hanger 30 includes a first guide rail 31g provided at the upper end of the connection pipe portion 31 b, and the main body 10 includes a second guide rail 12i provided at a lower end of the discharge pipe 12d to move along the first guide rail 31g. The first guide rail 31g is provided on inner opposite sides and a front side of the upper end of the connection pipe portion 31b, and the second guide rail 12i is provided on opposite sides and a rear side of the lower end of the discharge pipe 12d so as to correspond to the first guide rail 31g.

Therefore, because the clothes hanger 30 is separated from the discharge pipe 12d when the clothes hanger 30 is moved to the front side, the user may hang clothes on the clothes hanger 30 in a state where the clothes hanger 30 is separated from the main body 10.

When the clothes hanger 30 with clothes is moved to the rear side so that the first guide rail 31g is coupled to the second guide rail 12i, the connection pipe portion 31b of the clothes hanger 30 is again connected to the discharge pipe 12d, and thus air may be transferred to the clothes hanger 30 through the discharge pipe 12d. Therefore, the user may easily hang clothes on the clothes hanger 30.

In this embodiment, the clothes hanger 30 is detachably installed in the clothes management compartment 10a through the first guide rail 31g and the second guide rail 12i, but the present disclosure is not limited thereto, and the clothes hanger 30 may be detachably installed in the clothes management compartment 10a through a magnet or the like. The clothes hanger 30 may also be fixedly installed in the clothes management compartment 10a.

It will be apparent to those skilled in the art that various modifications and variations may be made in the present disclosure without departing from the scope of the present disclosure as defined by the appended claims.

## Claims

1. A clothes management apparatus comprising:
a main body (10) including a clothes management compartment (10a) and at least one interior air discharge pipe (12d) configured to discharge air from the main body (10); and
an upper garment hanger (31) attachable to the main body (10) in the clothes management compartment (10a) and configured to support an upper garment hung on the upper garment hanger (31) while the upper garment hanger (31) is attached to the main body (10),
wherein the upper garment hanger (31) includes a connection hole (31c) connectable to the at least one interior air discharge pipe (12d) of the main body (10) to receive air from the at least one interior air discharge pipe (12d) of the main body (10) into an interior of the upper garment hanger (31) through the connection hole (31c), and at least one upper garment hanger air discharge port (31d) to discharge air from the interior of the upper garment hanger (31) to an inside of the upper garment while the upper garment hanger (31) is attached to the main body (10) and the upper garment is hung on the upper garment hanger,
the main body (10) further includes at least one exterior air discharge port (12e) configured to discharge air from the main body (10) to an outside surface of the upper garment while the upper garment hanger (31) is attached to the main body (10) and the upper garment is hung on the upper garment hanger (31), **characterized in that**
the at least one upper garment hanger air discharge port (31d) includes a body air discharge port and a pair of sleeve air discharge ports,
wherein the upper garment hanger (31) further includes a first flow passage (31e) to guide air from the connection hole (31c) to an inside of a body of the upper garment through the body air discharge port, and a pair of second flow passages (31f) provided to be inclined downward on opposite sides of the first flow passage to guide air from the connection hole (31c) to an inside of respective sleeves of the upper garment through the respective pair of sleeve air discharge ports,
the inside of the at least one interior air discharge pipe (12d) is divided into a plurality of pipes (12f) formed in a rectangular shape and disposed to be spaced apart in parallel from each other, and
the at least one exterior air discharge port (12e) includes a plurality of exterior air discharge ports respectively provided at each side of the at least one interior air discharge pipe (12d).

2. The clothes management apparatus according to claim 1, wherein the upper garment hanger (31) is detachably installed on the main body (10) in the clothes management compartment (10a).

3. The clothes management apparatus according to claim 1, wherein the upper garment hanger (31) is movably installed on the at least one interior air discharge pipe (12d) to be installed on or separated from the at least one interior air discharge pipe (12d) by movement.

4. The clothes management apparatus according to claim 3, wherein:
the upper garment hanger (31) includes a first guide rail (31g) provided at an upper end of the upper garment hanger (31), and
the at least one interior air discharge pipe (12d) includes a second guide rail (12i) provided at a lower end of the at least one interior air discharge pipe (12d) to be movably installed in the first guide rail (31g).

5. The clothes management apparatus according to claim 1, further comprising a lower garment hanger (32) connected to a lower side of the upper garment hanger (31),
wherein the lower garment hanger (32) includes a lower garment hanging portion (32a) extending horizontally and configured to support a lower garment hung on the lower garment hanger (32).

6. The clothes management apparatus according to claim 5, wherein the lower garment hanging portion (32a) includes four wires.

7. The clothes management apparatus according to claim 5, wherein the lower garment hanger (32) further includes a filter accommodation portion (32b) connected to the lower garment hanging portion (32a) to accommodate a filter (33).

8. The clothes management apparatus according to claim 1, further comprising a steam generator (50) configured to provide steam to the main body (10),
wherein the at least one interior air discharge pipe (12d) is further configured to discharge the generated steam with the air from the main body (10) into the upper garment hanger (31).

## Patentansprüche

1. Kleidermanagementvorrichtung, umfassend:
einen Hauptkörper (10), der eine Kleidermanagementkammer (10a) und mindestens ein Innenluftabgaberohr (12d) enthält, das dazu konfiguriert ist, Luft aus dem Hauptkörper (10) abzugeben; und
einen Oberkörperbekleidungskleiderbügel (31), der an dem Hauptkörper (10) in der Kleidermanagementkammer (10a) anbringbar und dazu konfiguriert ist, eine Oberkörperbekleidung zu tragen, die an dem Oberkörperbekleidungskleiderbügel (31) aufgehängt ist, während der Oberkörperbekleidungskleiderbügel (31) an dem Hauptkörper (10) angebracht ist,
wobei der Oberkörperbekleidungskleiderbügel (31) ein Verbindungsloch (31c), das mit dem mindestens einen Innenluftabgaberohr (12d) des Hauptkörpers (10) verbindbar ist, um Luft aus dem mindestens einen Innenluftabgaberohr (12d) des Hauptkörpers (10) in ein Inneres des Oberkörperbekleidungskleiderbügels (31) durch das Verbindungsloch (31c) aufzunehmen, und
mindestens eine Luftabgabeöffnung (31d) des Oberkörperbekleidungskleiderbügels enthält, um Luft aus dem Inneren des Oberkörperbekleidungskleiderbügels (31) an eine Innenseite der Oberkörperbekleidung abzugeben, während der Oberkörperbekleidungskleiderbügel (31) an dem Hauptkörper (10) angebracht ist und die Oberkörperbekleidung an dem Oberkörperbekleidungskleiderbügel aufgehängt ist,
wobei der Hauptkörper (10) ferner mindestens eine Außenluftabgabeöffnung (12e) enthält, die dazu konfiguriert ist, Luft von dem Hauptkörper (10) an eine äußere Fläche der Oberkörperbekleidung abzugeben, während der Oberkörperbekleidungskleiderbügel (31) an dem Hauptkörper (10) angebracht ist und die Oberkörperbekleidung auf dem Oberkörperbekleidungskleiderbügel (31) aufgehängt ist, **dadurch gekennzeichnet, dass** die mindestens eine Luftabgabeöffnung (31d) des Oberkörperbekleidungskleiderbügels eine Körperluftabgabeöffnung und ein Paar Ärmelluftabgabeöffnungen enthält,
wobei der Oberkörperbekleidungskleiderbügel (31) ferner einen ersten Strömungskanal (31e) zum Leiten von Luft aus dem Verbindungsloch (31c) zu einer Innenseite eines Körpers der Oberkörperbekleidung durch die Körperluftabgabeöffnung und ein Paar zweiter Strömungskanäle (31f) enthält, die so bereitgestellt sind, dass sie auf gegenüberliegenden Seiten des ersten Strömungskanals nach unten geneigt sind, um Luft aus dem Verbindungsloch (31c) durch das jeweilige Paar von Ärmelluftabgabeöffnungen zu einer Innenseite von jeweiligen Ärmeln der Oberkörperbekleidung zu leiten,
die Innenseite des mindestens einen Innenluftabgaberohrs (12d) in eine Vielzahl von Rohren (12f) unterteilt ist, die in einer rechteckigen Form gebildet und so angeordnet sind, dass sie parallel voneinander beabstandet sind, und
die mindestens eine Außenluftabgabeöffnung (12e) eine Vielzahl von Außenluftabgabeöffnungen enthält, die jeweils an jeder Seite des mindestens einen Innenluftabgaberohrs (12d) bereitgestellt sind.

2. Kleidermanagementvorrichtung nach Anspruch 1, wobei der Oberkörperbekleidungskleiderbügel (31) lösbar an dem Hauptkörper (10) in der Kleidermanagementkammer (10a) installiert ist.

3. Kleidermanagementvorrichtung nach Anspruch 1, wobei der Oberkörperbekleidungskleiderbügel (31) beweglich an dem mindestens einen Innenluftabgaberohr (12d) installiert ist, um an dem mindestens einen Innenluftabgaberohr (12d) durch Bewegung installiert oder davon getrennt zu werden.

4. Kleidermanagementvorrichtung nach Anspruch 3, wobei:
der Oberkörperbekleidungskleiderbügel (31) eine erste Führungsschiene (31g) enthält, die an einem oberen Ende des Oberkörperbekleidungskleiderbügels (31) bereitgestellt ist, und
das mindestens eine Innenluftabgaberohr (12d) eine zweite Führungsschiene (12i) enthält, die an einem unteren Ende des mindestens einen Innenluftabgaberohrs (12d) bereitgestellt ist, um beweglich in der ersten Führungsschiene (31g) installiert zu werden.

5. Kleidermanagementvorrichtung nach Anspruch 1, ferner einen Unterkörperbekleidungskleiderbügel (32) umfassend, der mit einer unteren Seite des Oberkörperbekleidungskleiderbügels (31) verbunden ist, wobei der Unterkörperbekleidungskleiderbügel (32) einen Unterkörperbekleidungsaufhängeabschnitt (32a) enthält, der sich horizontal erstreckt und dazu konfiguriert ist, eine Unterkörperbekleidung zu tragen, die an dem Unterkörperbekleidungskleiderbügel (32) aufgehängt ist.

6. Kleidermanagementvorrichtung nach Anspruch 5, wobei der Unterkörperbekleidungsaufhängeabschnitt (32a) vier Drähte enthält.

7. Kleidermanagementvorrichtung nach Anspruch 5, wobei der Unterkörperbekleidungskleiderbügel (32) ferner einen Filteraufnahmeabschnitt (32b) enthält, der mit dem Unterkörperbekleidungsaufhängeabschnitt (32a) verbunden ist, um einen Filter (33) aufzunehmen.

8. Kleidermanagementvorrichtung nach Anspruch 1, ferner einen Dampfgenerator (50) umfassend, der dazu konfiguriert ist, dem Hauptkörper (10) Dampf bereitzustellen,
wobei das mindestens eine Innenluftabgaberohr (12d) ferner dazu konfiguriert ist, den erzeugten Dampf mit der Luft aus dem Hauptkörper (10) in den Oberkörperbekleidungskleiderbügel (31) abzugeben.

## Revendications

1. Appareil de gestion de vêtements comprenant :
un corps principal (10) comprenant un compartiment de gestion de vêtements (10a) et au moins un tuyau de décharge d'air intérieur (12d) conçu pour décharger l'air du corps principal (10) ; et
un cintre à vêtement pour le haut du corps (31) pouvant être fixé au corps principal (10) dans le compartiment de gestion de vêtements (10a) et conçu pour supporter un vêtement pour le haut du corps suspendu au cintre à vêtement pour le haut du corps (31) tandis que le cintre à vêtement pour le haut du corps (31) est fixé au corps principal (10),
ledit cintre à vêtement pour le haut du corps (31) comprenant un trou de raccordement (31c) pouvant être raccordé à l'au moins un tuyau de décharge d'air intérieur (12d) du corps principal (10) pour recevoir l'air en provenance du au moins un tuyau de décharge d'air intérieur (12d) du corps principal (10) dans un intérieur du cintre à vêtement pour le haut du corps (31) à travers le trou de raccordement (31c), et au moins un orifice de décharge d'air (31d) de cintre à vêtement pour le haut du corps pour décharger l'air de l'intérieur du cintre à vêtement pour le haut du corps (31) jusqu'à l'intérieur du vêtement pour le haut du corps pendant que le cintre à vêtement pour le haut du corps (31) est fixé au corps principal (10) et ledit vêtement pour le haut du corps étant suspendu au cintre à vêtement pour le haut du corps,
ledit corps principal (10) comprenant en outre au moins un orifice de décharge d'air extérieur (12e) conçu pour décharger l'air du corps principal (10) vers une surface extérieure du vêtement pour le haut du corps pendant que le cintre à vêtement pour le haut du corps (31) est fixé au corps principal corps (10) et que le vêtement pour le haut du corps est suspendu au cintre à vêtement pour le haut du corps (31), **caractérisé en ce que**
le au moins un orifice de décharge d'air (31d) de cintre à vêtement pour le haut du corps comprend un orifice de décharge d'air de corps et une paire d'orifices de décharge d'air de manche,
ledit cintre à vêtement pour le haut du corps (31) comprenant en outre un premier passage d'écoulement (31e) pour guider l'air à partir du trou de raccordement (31c) jusqu'à un intérieur d'un corps du vêtement pour le haut du corps à travers l'orifice de décharge d'air de corps, et une paire de seconds passages d'écoulement (31f) prévus pour être inclinés vers le bas sur des côtés opposés du premier passage d'écoulement pour guider l'air à partir du trou de raccordement (31c) jusqu'à un intérieur de manches respectives du vêtement pour le haut du corps à travers la paire respective d'orifices de décharge d'air de manche,
ledit intérieur du au moins un tuyau de décharge d'air intérieur (12d) étant divisé en une pluralité de tuyaux (12f) formés dans une forme rectangulaire et disposés pour être espacés parallèlement les uns des autres, et le au moins un orifice de décharge d'air extérieur (12e) comprenant une pluralité d'orifices de décharge d'air extérieur prévus respectivement de chaque côté du au moins un tuyau de décharge d'air intérieur (12d).

2. Appareil de gestion de vêtements selon la revendication 1, ledit cintre à vêtement pour le haut du corps (31) étant installé de manière amovible sur le corps principal (10) dans le compartiment de gestion de vêtements (10a).

3. Appareil de gestion de vêtements selon la revendication 1, ledit cintre à vêtement pour le haut du corps (31) étant installé de manière mobile sur le au moins un tuyau de décharge d'air intérieur (12d) devant être installé sur le au moins un tuyau de décharge d'air intérieur (12d), ou séparé de ce-dernier, par mouvement.

4. Appareil de gestion de vêtements selon la revendication 3,
ledit cintre à vêtement pour le haut du corps (31) comprenant un premier rail de guidage (31g) prévu au niveau d'une extrémité supérieure du cintre à vêtement pour le haut du corps (31), et ledit au moins un tuyau de décharge d'air intérieur (12d) comprenant un second rail de guidage (12i) prévu au niveau d'une extrémité inférieure du au moins un tuyau de décharge d'air intérieur (12d) devant être installé de façon mobile dans le premier rail de guidage (31g).

5. Appareil de gestion de vêtements selon la revendication 1, comprenant en outre un cintre à vêtement pour le bas du corps (32) raccordé à un côté inférieur du cintre à vêtement pour le haut du corps (31), ledit cintre à vêtement pour le bas du corps (32) comprenant une partie de suspension de vêtement pour le bas du corps (32a) s'étendant horizontalement et conçu pour supporter un vêtement pour le bas du corps suspendu au cintre à vêtement pour le bas du corps (32).

6. Appareil de gestion de vêtements selon la revendication 5, ladite partie de suspension de vêtement pour le bas du corps (32a) comprenant quatre fils métalliques.

7. Appareil de gestion de vêtements selon la revendication 5, ledit cintre à vêtement pour le bas du corps (32) comprenant en outre une partie de logement de filtre (32b) raccordée à la partie de suspension de vêtement pour le bas du corps (32a) pour loger un filtre (33).

8. Appareil de gestion de vêtements selon la revendication 1, comprenant en outre un générateur de vapeur (50) conçu pour fournir de la vapeur au corps principal (10),
ledit au moins un tuyau de décharge d'air intérieur (12d) étant en outre conçu pour décharger la vapeur générée avec l'air du corps principal (10) dans le cintre à vêtement pour le haut du corps (31).
